# DEMANDE DE BREVET EUROPEEN

(11) **EP 2 364 794 A1**
(43) Date de publication de la demande: **14.09.2011**
(21) Numéro de dépôt: 11154955.6
(22) Date de dépôt: 18.02.2011
(51) Int. Cl.: B21D 53/92, B21D 47/00, B64C 1/00, B64C 3/24

(54) **Procédé de réalisation d'une structure métallique courbe renforcée et structure correspondante**

(30) Priorité: 23.02.2010 FR 1051281
(71) Demandeur: Airbus Opérations SAS, 31060 Toulouse (FR)
(72) Inventeur: Bouchet, Eric, 31840 Aussonne (FR); Lafly, Anne-Laure, 31200 Toulouse (FR); Van Der Veen, Sjoerd, 31170 Tournefeuille (NL)
(74) Mandataire: Schwartz, Thierry J.

(57) **Abrégé**

L'invention concerne un procédé de réalisation d'une structure métallique courbe renforcée, réalisée à partir d'une tôle forte ou épaisse d'un alliage d'aluminium contenant du scandium et une structure métallique obtenue par un tel procédé.

Le procédé consiste à combiner des étapes de formage (200) et d'usinage (300), l'étape de formage (200) conférant la ou les courbure(s) à la structure et l'étape d'usinage (300) réalisant un réseau de nervures de renfort de la structure. Une étape de finition (400) peut compléter les étapes précédentes.

Un tel procédé permet d'obtenir une structure métallique monobloc présentant de bonnes propriétés mécaniques de manière simple et rapide. Application à la fabrication d'une structure métallique courbe renforcée d'un sous-ensemble d'aéronef.

## Description

L'invention concerne un procédé de réalisation d'une structure métallique courbe renforcée ou raidie, ainsi que la structure réalisée par la mise en oeuvre de ce procédé. La structure est dite raidie ou renforcée en ce qu'elle présente des nervures (encore appelées « raidisseurs ») de renfort contre la déformation de la structure.

De manière générale dans la suite de la description, on entend par les termes « tôle mince » des tôles dont l'épaisseur est inférieure à 12,7 mm, les tôles dont l'épaisseur est comprise entre 12,7 et 40 mm sont dites fortes et les tôles dont l'épaisseur est supérieure à 40 mm sont dites épaisses.

Classiquement, ce type de structure est réalisé par laminage, mise en solution à haute température suivi d'une trempe, étirage et maturation ou revenu de tôles minces élémentaires constituées par un alliage d'aluminium. Une telle gamme de traitements permet aux tôles de présenter des rayons de courbure adaptés à la conformation de la structure visée. Les tôles et des raidisseurs/renforts sont ensuite assemblés par rivetage pour former la structure finale. Ainsi, par exemple, pour des cases de train d'atterrissage, les tôles sont assemblées en sous-ensembles raidies rivetées les unes aux autres. Par un usinage mécanique, chimique ou électrochimique des tôles minces, de la matière est enlevée en superficie afin de permettre à la structure de présenter l'état de surface souhaitée. Des renforts sont également ajoutés par rivetage pour consolider la tôle dans son ensemble.

Le dimensionnement des structures visées nécessite donc l'assemblage de tôles minces élémentaires et le renfort de ces tôles.

Les solutions actuelles présentent de nombreux inconvénients : un nombre important de cycles de fabrication de durées élevées se rapportant aux opérations d'assemblage, de rivetage et de fixations de renfort, et générant des coûts de fabrication élevés. De plus, cette approche par assemblage nuit à la liberté de conception et d'adaptation des structures.

Par ailleurs, l'approche consistant à réaliser des structures à partir de tôles fortes dans les alliages habituellement utilisés à base d'Al-Zn (AA7XXX) ou d'Al-Cu (AA2XXX) conduit à la réalisation de pièces présentant des propriétés mécaniques réduites suite à une mise en forme à chaud. En effet, les températures élevées peuvent détruire la microstructure de la tôle, ce qui se traduit par des caractéristiques mécaniques limitées, s'agissant de la résistance à la traction, de la limite d'élasticité, de la résistance à la fatigue ou de la résistance aux pressions externes. De l'autre coté, lors d'une mise en forme à froid de ces pièces, des contraintes internes importantes se créent et ne se résorbent pas ou mal.

L'invention vise à réaliser des structures métalliques intégrales, présentant des propriétés mécaniques satisfaisantes afin de résister à la pression et aux impacts externes.

Pour ce faire, l'invention propose de réaliser ce type de structures à partir d'une tôle forte ou épaisse d'un alliage d'aluminium contenant du scandium. De manière remarquable, il a été constaté qu'une tôle forte ou épaisse formée dans un tel alliage pouvait subir une mise en conformation avec des rayons de courbure élevés tout en conservant des caractéristiques mécaniques satisfaisantes, par préservation des microstructures et en évitant de générer des contraintes résiduelles importantes.

Plus précisément, la présente invention a pour objet un procédé de réalisation d'une structure métallique raidie à courbure uni ou bi-axiales sous forme monobloc dite structure intégrale, consistant à usiner dans une tôle forte ou épaisse d'un matériau d'alliage d'aluminium contenant du scandium, par exemple par laminage ou tout autre procédé de formation de ce matériau en ladite tôle, puis à combiner des étapes de formage et d'usinage de ladite tôle, l'étape de formage conférant la ou les courbure(s) et l'étape d'usinage réalisant un réseau de nervures de renfort.

Dans ces conditions, il n'est plus nécessaire d'assembler plusieurs tôles élémentaires, la forme monobloc constituant la structure intégrale.

Selon des modes de réalisation particuliers :
- l'étape d'usinage est effectuée après l'étape de formage ;
- l'étape d'usinage précède l'étape de formage ;
- l'étape d'usinage est un usinage 3D et 5 axes ;
- le formage est un formage à chaud;
- le formage à chaud est un conformage avec un outillage de poinçonnage et de matriçage chauffé à la même température que la tôle, cet outillage pouvant être creux et/ou en matériau céramique afin de minimiser sa conductivité thermique et éviter les pertes de chaleur ;
- le contact thermique entre la matrice et la tôle à former est minimisé par bossage en bordure de la matrice ;
- l'échange thermique peut également être minimisé en préchauffant le moule et/ou poinçon;
- le formage à chaud est réalisé par pression des outils de poinçonnage sur la matrice à une température comprise entre 325 et 350 °C pendant une durée variable pouvant s'étaler par exemple jusqu'à 24 heures, la déformation résultant alors d'un fluage ;
- le formage à chaud s'achève par le retrait des outils de matriçage suivi d'un refroidissement lent de la forme obtenue à l'air libre ou dans une enceinte appropriée, afin de favoriser la relaxation des contraintes internes et minimiser leur présence résiduelle ;
- l'alliage d'aluminium est un alliage Al-Mg-Sc (aluminium, magnésium, scandium) avec des proportions de magnésium et de scandium respectivement inférieures à 8% et 0,5 ;
- le procédé peut être complété par une étape de finition par rectification.

L'invention se rapporte également à une structure métallique courbe renforcée réalisée par le procédé ci-dessus, notamment pour la réalisation d'un sous-ensemble d'aéronef, en particulier une case de train d'atterrissage, un fond étanche (en pointe avant), un cockpit et une issue de secours d'avion.

D'autres données et avantages de la présente invention apparaîtront à la lecture de la description qui suit, en référence aux figures annexées qui représentent, respectivement :
- la figure 1, un diagramme reprenant les principales étapes de deux modes de mise en oeuvre du procédé selon l'invention ;
- la figure 2, une demie-vue en coupe schématique de la mise en oeuvre d'un exemple de formage à chaud d'une tôle épaisse selon l'invention pour un fond étanche d'avion ;
- la figure 3, une vue en coupe schématique de la mise en oeuvre d'un exemple d'usinage 3D - 5 axes de tôle épaisse selon l'invention pour une case de train d'atterrissage; et
- les figures 4a à 4d, des vues en perspective d'exemples de structures métalliques courbes et renforcées selon l'invention par mise en oeuvre du procédé.

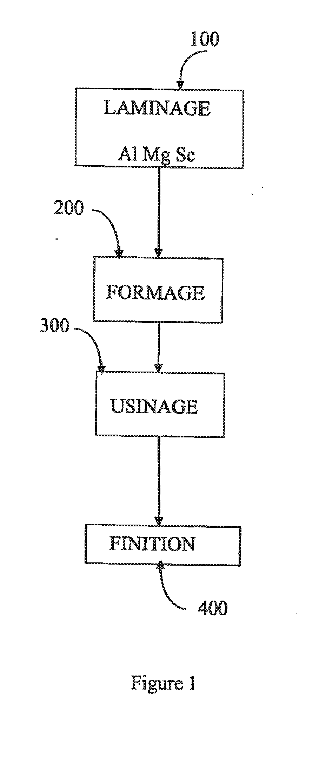

En référence à la figure 1, la première étape 100 du procédé selon l'invention consiste à laminer une forme primaire en tôle forte (supérieure à 12,7 mm d'épaisseur), voire épaisse (par exemple entre 40 et 250 mm), et constituée par un alliage à base d'Al-Mg-Sc comprenant, dans l'exemple, 0,025% de scandium. Les proportions de magnésium et de scandium restent respectivement inférieures à 8 et 0,5%, de préférence respectivement entre 2 et 7% et entre 0,01 et 0,45%, et de manière encore plus préférentielle dans les intervalles 3-6% et 0,015-0,4%. Un tel alliage est décrit dans le document de brevet EP 1 682 688.

Dans le mode de réalisation préféré et illustré en figure 1, la première étape de réalisation consiste à effectuer un formage à chaud (étape 200) d'une forme primaire en alliage Al-Mg-Sc formant alors le squelette de la structure à réaliser.

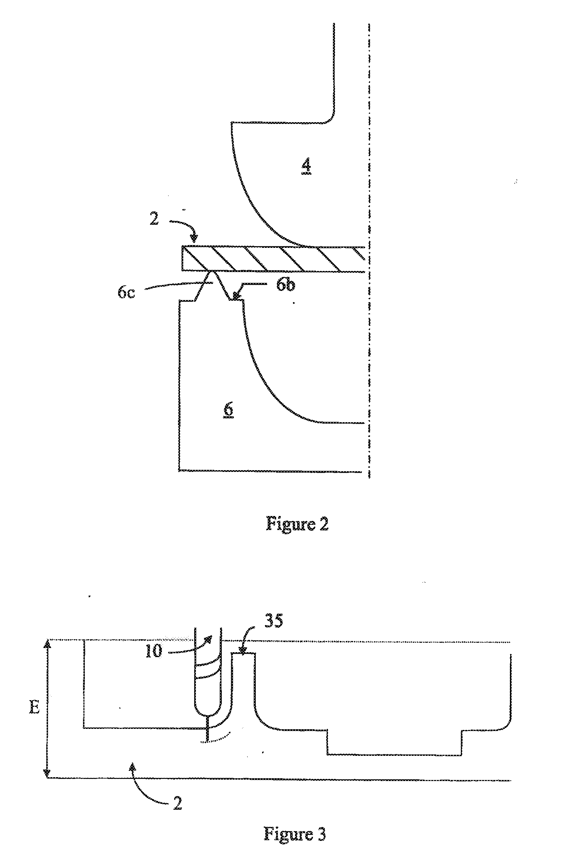

Le schéma en coupe de la figure 2 montre plus particulièrement un exemple de mise en oeuvre de formage à chaud d'une tôle épaisse selon l'invention pour réaliser une case de train d'atterrissage. Une tôle laminée 2 de 70 mm d'épaisseur est disposée entre le poinçon mâle 4 et la matrice 6. L'outillage est réalisé en céramique pour minimiser sa conductivité thermique et réduire ainsi les pertes énergétiques. Les outils sont préchauffés à la température de formage, c'est-à-dire à environ 330-340°C. La matrice 6 présente sur ses bordures 6b un bossage 6c qui limite le contact thermique entre la tôle et la matrice. Alternativement, il est possible d'insérer un matelas isolant.

Le formage consiste alors à déplacer le poinçon 4 contre la matrice 6 de forme complémentaire avec une force appropriée. Le poinçon exerce alors une pression sur la tôle 2. Sous l'effet conjugué de cette pression et de la température, la tôle 2 va se déformer selon une configuration convexe et épouser la forme de la matrice 6 sur sa face externe 22, et la forme complémentaire du poinçon 4 sur sa face interne 24, les faces externe et interne étant sensiblement parallèles.

La tôle 2 est ensuite retirée rapidement des outils de formage. Les bords libres opposés de la tôle 2 après mise en forme sont maintenus à égale distance par la mise en place de barres soudées afin de maintenir la forme de la structure lors du refroidissement. Ce refroidissement est un refroidissement lent à l'air libre pour minimiser les contraintes résiduelles par une lente relaxation. Dans une variante, le refroidissement peut être effectué dans une enceinte adaptée à un lent refroidissement.

Après ce refroidissement - et en se reportant de nouveau à la figure 1, il est procédé à un usinage (étape 300) de la structure mise en courbure à l'étape de formage, en particulier un fraisage 3D par un outillage 5 axes. Une telle étape permet de former dans l'épaisseur E de 70 mm de la tôle 2 des nervures de renfort 35, comme illustrée en figure 3, en particulier des nervures formant un réseau de triangles de type « isogrid ». Pour réaliser des cycles d'usinage 3D de qualité, une programmation sur une commande de machine 10 à fraiseuse 5 axes est avantageusement mise en oeuvre.
Un des avantages de l'invention est de pouvoir rendre inutile les étapes de redressage et/ou de pressage pour le pliage des tôles ou de roulage pour le cintrage. La tôle obtenue selon le procédé de l'invention est en principe directement à la cote après la mise en forme à chaud, et l'usinage prévu ne devrait pas modifier cet état. L'usinage 300 peut éventuellement être suivi, si besoin, d'une étape de finition 400 (cf. figure 1) par rectification afin d'obtenir des caractéristiques de surfaçage particulières de la structure visée. Une étape de redressage et de conformage par presse, par grenaillage ou par tout autre moyen de conformage peut être envisagée dans des cas exceptionnels.

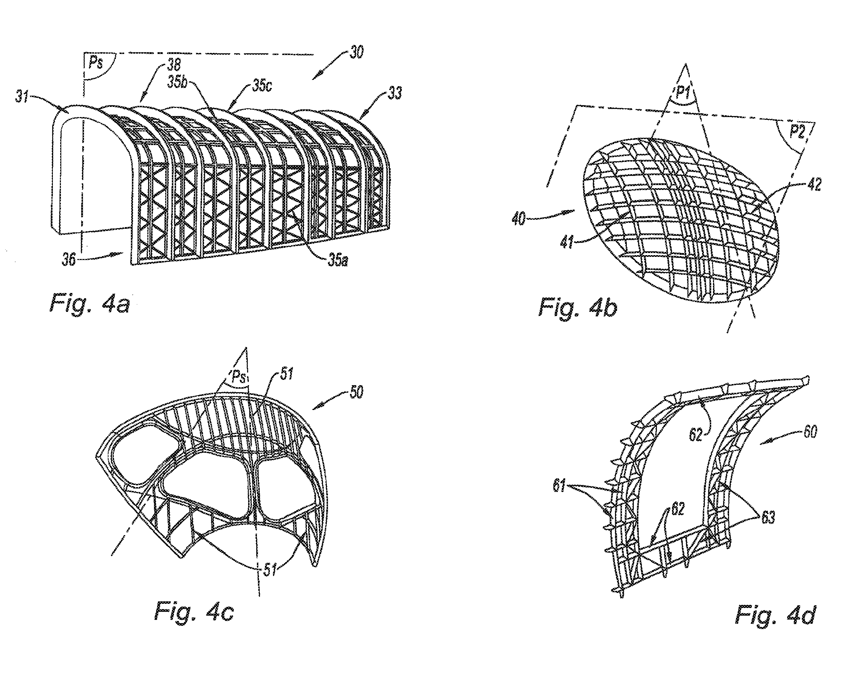

La structure de la figure 4a, une case de train d'atterrissage 30 réalisée conformément à l'invention, présente des nervures « isogrid » 35a sur les parois latérales 36 de la case et des nervures 35b sur le toit 38 de la case, parallèlement au plan de symétrie Ps de la case. D'autres nervures structurantes 35c forment des arches parallèles aux arches d'entrée 31 et de sortie 33 de la case, perpendiculairement au plan de symétrie Ps.

D'autres exemples de sructures monoblocs courbes et renforcées sont illustrés respectivement par les figures 4b à 4d :
- un fond étanche 40 (pointe avant d'avion) à double courbure bi-axiales selon deux plans perpendiculaires P1 et P2, présentant des nervures parallèles 41 et 42 selon ces deux plans perpendiculaires ;
- un cockpit 50 présentant des nervures 51 de courbure uniaxe essentiellement parallèles au plan de symétrie Ps du cockpit 50 ;
- un encadrement de porte 60 à double courbure présentant des nervures 61 et 62 respectivement parallèles à l'une et l'autre de ces courbures, ainsi que des nervures diagonales 63.

Alternativement, dans un autre mode de réalisation, l'étape d'usinage 300 de la figure 1 - consistant à usiner la forme primaire laminée de la première étape 100 - précède l'étape de formage 200.

Les conditions de mise en oeuvre de l'usinage et du formage sont adaptées à l'ordre dans lesquelles ces opérations se succèdent. En particulier les conditions de refroidissement après formage et l'outillage de formage lorsque la tôle est déjà usinée.

L'invention n'est pas limitée aux exemples de réalisation décrits et représentés. Il est par exemple possible de mettre en oeuvre tout type de formage et d'usinage adapté à la structure à réaliser, en fonction des critères de dimensions, de densité de réseaux de nervures ou de rayons de courbure plus ou moins importants à atteindre. De plus, l'invention n'est pas limitée au domaine aéronautique et peut s'appliquer dans tout domaine, par exemple dans le domaine de transport maritime ou terrestre ou dans le domaine de la construction.

## Revendications

1. Procédé de réalisation d'une structure métallique renforcée à courbure uni (Ps) ou bi-axiales (P1, P2) sous forme monobloc, **caractérisé en ce qu'**il consiste à former en tôle forte ou épaisse un matériau d'alliage d'aluminium contenant du scandium, puis à combiner des étapes de formage (200) et d'usinage (300) de ladite tôle, l'étape de formage (200) conférant la ou les courbure(s) et l'étape d'usinage (300) réalisant un réseau de nervures de renfort (35, 41, 42, 51, 61, 62).

2. Procédé de réalisation selon la revendication 1, dans lequel l'étape d'usinage (300) est effectuée après l'étape de formage (200).

3. Procédé de réalisation selon la revendication 1, dans lequel l'étape d'usinage (300) précède l'étape de formage (200).

4. Procédé de réalisation selon l'une quelconque des revendications précédentes, dans lequel l'étape d'usinage (300) est un usinage 3D et 5 axes.

5. Procédé de réalisation selon l'une quelconque des revendications précédentes, dans lequel le formage (200) est un formage à chaud.

6. Procédé de réalisation selon la revendication précédente, dans lequel l'étape de formage à chaud est un conformage avec un outillage de poinçonnage (4) et de matriçage (6) chauffé à la même température que la tôle.

7. Procédé de réalisation selon la revendication 6, dans lequel l'outillage est creux et/ou en matériau céramique.

8. Procédé de réalisation selon l'une quelconque des revendications 5 à 7, dans lequel le contact thermique entre la matrice (6) et la tôle à former (2) est minimisé par bossage (6c) en bordure (6c) de la matrice (6).

9. Procédé de réalisation selon l'une quelconque des revendications 5 à 8, dans lequel le formage à chaud (200) est réalisé par pression des outils de poinçonnage sur la matrice à une température comprise entre 325 et 350°C.

10. Procédé de réalisation selon l'une quelconque des revendications 5 à 9, dans lequel l'étape de formage à chaud (200) s'achève par le retrait des outils de matriçage (4, 6) suivi d'un refroidissement lent de la forme obtenue.

11. Procédé de réalisation selon l'une quelconque des revendications précédentes, dans lequel l'alliage d'aluminium est un alliage Al-Mg-Sc avec des proportions de magnésium et de scandium respectivement inférieures à 8% et 0,5%, de préférence respectivement entre 2 et 7% et entre 0,01 et 0,45%, et de manière encore plus préférentielle dans les intervalles 3-6% et 0,015-0,4%.

12. Procédé de réalisation selon l'une quelconque des revendications précédentes, dans lequel le procédé est finalisé par une étape de finition (400).

13. Structure métallique courbe renforcée d'un sous ensemble d'aéronef, **caractérisée en ce qu'**elle est réalisée par la mise en oeuvre du procédé selon l'une quelconque des revendications précédentes.
